# FASCICULE DE BREVET EUROPEEN

(11) **EP 3 134 280 B1**
(45) Date de publication et mention de la délivrance du brevet: **04.04.2018**
(21) Numéro de dépôt: 15717185.1
(22) Date de dépôt: 22.04.2015
(51) Int. Cl.: B60C 11/03, B60C 11/13, B60C 9/20

(54) **PNEUMATIQUE POUR VÉHICULE DE GÉNIE CIVIL**
REIFEN FÜR EIN BAUMASCHINEN-SCHWERLASTFAHRZEUG
TYRE FOR VEHICLE OF CONSTRUCTION PLANT TYPE

(30) Priorité: 22.04.2014 FR 1453593
(43) Date de publication de la demande: 01.03.2017
(73) Titulaire: Compagnie Générale des Etablissements Michelin, 63000 Clermont-Ferrand (FR)
(72) Inventeur: DOMINGO, Alain, F-63040 Clermont-Ferrand Cedex 9 (FR); CLEMENT, Emmanuel, F-63040 Clermont-Ferrand Cedex 9 (FR); RAGOT, Pascal, F-63040 Clermont-Ferrand Cedex 9 (FR)
(74) Mandataire: Desbordes, Guillaume
(86) Numéro de dépôt international: PCT/EP2015/058714
(87) Numéro de publication internationale: WO 2015/162176

(56) Documents cités:
- JP-A- 2009 067 321
- JP-B2- H07 108 602
- US-A- 5 318 643
- US-A- 5 688 344
- US-B2- 6 817 395

## Description

L'invention concerne un pneumatique, notamment pour véhicules de génie civil.

On connait de l'état de la technique un pneumatique pour véhicule de génie civil à armature de carcasse radiale comprenant une bande de roulement, deux bourrelets inextensibles, deux flancs reliant les bourrelets à la bande de roulement et une armature de sommet, disposée circonférentiellement entre l'armature de carcasse et la bande de roulement. Cette armature de sommet comprend plusieurs nappes de caoutchouc, éventuellement renforcées par des éléments de renforts tels que des câbles métalliques.

L'armature de sommet comprend au moins deux nappes superposées, dites nappes de travail, dont les câbles de renfort sont disposés pratiquement parallèles les uns aux autres à l'intérieur d'une nappe, mais croisés d'une nappe à l'autre, c'est-à-dire inclinés, symétriquement ou non, par rapport au plan circonférentiel médian, d'un angle qui est généralement compris entre 15° et 40° selon le type de pneu considéré.

L'armature de sommet comprend également une ou plusieurs nappes dites de protection chargées de protéger le reste de l'armature de sommet des agressions externes, notamment des perforations.

Dans ce type de pneumatique, l'armature de sommet peut également comprendre d'autres nappes, par exemple des nappes dites de frettage comportant des câbles orientés sensiblement selon la direction circonférentielle (également appelées nappes à zéro degré), qu'elles soient radialement externes ou internes par rapport aux nappes de travail.

Un tel pneumatique est soumis à de nombreuses agressions. En effet, le roulage de ce type de pneumatique se fait habituellement sur un revêtement accidenté comprenant des indenteurs, par exemple des pierres présentant parfois une taille de l'ordre de plusieurs dizaines de centimètres.

En présence d'indenteurs exerçant une sollicitation trop importante sur l'armature de sommet du pneumatique, on observe la rupture des câbles des nappes de travail rendant alors le pneumatique inutilisable.

Les concepteurs de pneumatiques ont, jusqu'à présent, tenter de remédier au problème de rupture des câbles des nappes de travail en les renforçant mécaniquement.

Une solution consiste en l'utilisation, au sein des nappes de travail, de câbles métalliques présentant des forces à rupture élevées, et notamment par l'utilisation de câbles métalliques de plus gros diamètre.

Toutefois, l'utilisation de nappes de travail comprenant des câbles métalliques de plus gros diamètre provoque, du fait de leur épaisseur importante, des cisaillements importants sur les bords des nappes de travail, entre ces nappes de travail et les masses de gomme adjacentes. Ces cisaillements sont à l'origine de poches de clivage qui conduisent à la séparation des nappes de travail et des masses de gomme adjacentes.

En outre, l'utilisation de câbles métalliques de plus gros diamètres conduit à une augmentation de la rigidité des bords des nappes de travail ce qui réduit l'aptitude de chaque nappe de travail à épouser la forme arrondie imposée par l'ébauche sur laquelle chaque nappe de travail est déposée lors de la fabrication du pneumatique.

On connait également de l'état de la technique un pneumatique dépourvu d'armature de frettage comprenant des éléments de renfort de frettage faisant un angle au plus égal à 10° avec la direction circonférentielle du pneumatique. Un tel état de la technique est illustré par US5318643.

L'invention a donc pour but de renforcer indirectement les nappes de travail de façon à les rendre plus résistantes aux indenteurs. En d'autres termes, l'invention a pour but d'augmenter la résistance mécanique des nappes de travail aux indenteurs en limitant l'augmentation de la résistance mécanique apportées à ces nappes de travail.

A cet effet, l'invention a pour objet un pneumatique comprenant une bande de roulement et une armature de sommet agencée radialement à l'intérieur de la bande de roulement, l'armature de sommet comprenant :
- une armature de protection comprenant au moins une nappe de protection présentant une force à rupture Fm_{NSP} ;
- une armature de travail comprenant au moins une nappe de travail présentant une force à rupture Fm_{NST}, l'armature de travail étant agencée radialement à l'intérieur de l'armature de protection; et
- une armature de frettage comprenant au moins une nappe de frettage, la nappe de frettage comprenant des éléments de renfort, dit de frettage, les éléments de renfort de frettage faisant un angle au plus égal à 10° avec la direction circonférentielle du pneumatique.
et dans lequel le rapport Fm_{NSP}/Fm_{NST} est supérieur ou égal à 0,27.

Les inventeurs à l'origine de l'invention ont découvert que les nappes de travail n'étaient pas significativement plus résistantes aux sollicitations exercées par les indenteurs même si elles étaient plus robustes. Ainsi, les inventeurs ont découvert que le renforcement mécanique de l'armature de protection associée à une armature de frettage permettait d'obtenir indirectement une amélioration de la résistance des nappes de travail aux sollicitations exercées par les indenteurs sur le pneumatique contrairement au seul renforcement direct des nappes de travail.

La présence d'une armature de frettage permet, de façon inattendue, d'améliorer la résistance des nappes de travail, contrairement à ce que l'homme du métier aurait pu prévoir. En effet, l'armature de frettage ayant pour effet de rigidifier le sommet du pneumatique, on aurait pu s'attendre à une rupture plus précoce des nappes de travail du fait de la moindre déformabilité du sommet du pneumatique sous l'effet des indenteurs. Or, comme le montre les résultats des tests comparatifs rassemblés ci-après, la présence d'une armature de frettage associée à un rapport Fm_{NSP}/Fm_{NST} supérieur ou égal à 0,27 permet indirectement une amélioration de la résistance des nappes de travail aux sollicitations exercées par les indenteurs sur le pneumatique.

Avantageusement, le rapport Fm_{NSP}/Fm_{NST} est supérieur ou égal à 0,30, de préférence à 0,35, plus préférentiellement 0,41 et encore plus préférentiellement à 0,50.

Avantageusement, le rapport Fm_{NSP}/Fm_{NST} est inférieur ou égal à 0,90, de préférence à 0,70.

Dans un mode de réalisation préféré de l'invention, chaque nappe de protection présente une force à rupture Fm_{NSP} supérieure ou égale à 1300 daN.cm⁻¹, de préférence à 1400 daN.cm⁻¹, plus préférentiellement à 1500 daN.cm⁻¹ et encore plus préférentiellement à 1600 daN.cm⁻¹.

De telles forces à rupture des nappes de protection peuvent être obtenues en faisant varier de nombreux paramètres.

Dans un mode de réalisation, chaque nappe de protection comprenant des éléments de renfort, dit de protection, chaque élément de renfort de protection présente une force à rupture supérieure ou égale à 3000 N, de préférence à 3500 N, plus préférentiellement à 4500 N et encore plus préférentiellement à 5500 N. Un des paramètres évoqués ci-dessus est la force à rupture unitaire de chaque élément de renfort ou câble.

Dans un autre mode de réalisation, chaque nappe de protection comprenant des éléments de renfort, dit de protection, le pas de pose des éléments de renfort de protection va de 1,2 à 6,5 mm, de préférence de 2,5 à 5,0 mm, et plus préférentiellement de 3,5 à 4,5 mm. Un autre des paramètres évoqués ci-dessus est le pas de pose. Plus celui-ci est court, plus la densité d'éléments de renfort est importante et la valeur de force à rupture de la nappe est élevée. Toutefois, une densité trop élevée d'éléments de renfort pénalise le poids du pneumatique. A l'inverse, une densité trop faible d'éléments de renfort permet la pénétration de corps solides et le passage de ces corps entre deux éléments de renfort adjacents.

Les éléments de renfort des nappes de protection, de travail et de frettage sont, au sein d'une même nappe, agencés côte à côte parallèlement les uns aux autres selon une direction principale sensiblement perpendiculaire à la direction générale selon laquelle ces éléments de renfort s'étendent. Le pas est la distance, selon la direction principale, séparant deux points analogues de deux éléments de renfort adjacents, c'est-à-dire la distance axe à axe entre deux éléments de renfort adjacents.

Dans un mode de réalisation, chaque nappe de travail présente une force à rupture Fm_{NST} supérieure ou égale à 2000 daN.cm⁻¹, de préférence à 2500 daN.cm⁻¹, plus préférentiellement à 3000 daN.cm⁻¹ et encore plus préférentiellement à 4000 daN.cm⁻¹.

Dans un mode de réalisation, chaque nappe de travail comprenant des éléments de renfort, dit de travail, chaque élément de renfort de travail présente une force à rupture supérieure ou égale à 15000 N, de préférence à 20000 N, plus préférentiellement à 25000 N.

Dans un autre mode de réalisation, chaque nappe de travail comprenant des éléments de renfort, dit de travail, le pas de pose des éléments de renfort de travail va de 2,5 à 7,5 mm, de préférence de 3,0 à 7,0 mm, et plus préférentiellement de 3,5 à 6,5 mm.

Dans un mode de réalisation, l'armature de protection est intercalée radialement entre la bande de roulement et l'armature de travail.

Selon une caractéristique optionnelle du pneumatique, chaque nappe de protection comprenant des éléments de renfort, dit de protection, les éléments de renfort de protection font un angle au moins égal à 10°, de préférence allant de 10° à 35° et plus préférentiellement de 15° à 35° avec la direction circonférentielle du pneumatique.

Selon une autre caractéristique optionnelle du pneumatique, chaque nappe de travail comprenant des éléments de renfort, dit de travail, les éléments de renfort de travail font un angle au plus égal à 60°, de préférence allant de 15° à 40° avec la direction circonférentielle du pneumatique.

Avantageusement, les éléments de renfort de frettage font un angle allant de 5° à 10° avec la direction circonférentielle du pneumatique.

Dans un mode de réalisation préféré de l'invention, chaque nappe de frettage présente une force à rupture Fm_{NSF} supérieure ou égale à 1300 daN.cm⁻¹, de préférence à 1500 daN.cm⁻¹, plus préférentiellement à 1800 daN.cm⁻¹ et encore plus préférentiellement à 2000 daN.cm⁻¹.

Dans un mode de réalisation, chaque élément de renfort de frettage présente une force à rupture supérieure ou égale à 2500 N, de préférence à 4000 N, plus préférentiellement à 6000 N et encore plus préférentiellement à 8500 N.

Dans un autre mode de réalisation, le pas de pose des éléments de renfort de frettage va de 1,8 à 6,5 mm, de préférence de 3,0 à 5,5 mm, et plus préférentiellement de 3,7 à 4,8 mm.

Dans un mode de réalisation, l'armature de frettage est agencée radialement à l'intérieur de l'armature de travail.

Avantageusement, le pneumatique comprend un sommet surmonté de la bande de roulement, deux flancs, deux bourrelets, chaque flanc reliant chaque bourrelet au sommet, une armature de carcasse ancrée dans chacun des bourrelets et s'étendant dans les flancs jusque dans le sommet.

Dans un mode de réalisation préféré, l'armature de carcasse est agencée radialement à l'intérieur de l'armature de sommet.

Avantageusement, l'armature de carcasse comprend au moins une nappe de carcasse comprenant des éléments de renfort, dit de carcasse, les éléments de renfort de carcasse faisant un angle supérieur ou égal à 65°, de préférence à 80° et plus préférentiellement allant de 80° à 90° par rapport à la direction circonférentielle du pneumatique.

Dans un mode de réalisation préféré, le pneumatique présente une dimension de type W R U dans laquelle U≥35, de préférence U≥49 et plus préférentiellement U≥57.Dans un mode de réalisation préférentiel, l'armature de protection comprend plusieurs nappes de protection dont au moins l'une d'entre elles, et encore plus préférentiellement chacune d'entre elles, présente une force à rupture Fm_{NSP} telle que le rapport Fm_{NSP}/Fm_{NST} est supérieur ou égal à 0,27.

Dans un autre mode de réalisation préférentiel, l'armature de travail comprend plusieurs nappes de travail dont au moins l'une d'entre elles, et encore plus préférentiellement chacune d'entre elles, présente une force à rupture Fm_{NST} telle que le rapport Fm_{NSP}/Fm_{NST} est supérieur ou égal à 0,27.

Dans un autre mode de réalisation encore plus préféré, l'armature de protection comprenant plusieurs nappes de protection, l'armature de travail comprenant plusieurs nappes de travail, au moins une nappe de protection, et plus préférentiellement chacune d'elles, présente une force à rupture Fm_{NSP} et au moins une nappe de travail, et plus préférentiellement chacune d'elles, présente une force à rupture Fm_{NST} telles que le rapport Fm_{NSP}/Fm_{NST} est supérieur ou égal à 0,27.

De préférence, chaque élément de renfort de protection et/ou de travail est un élément filaire. Par élément filaire, on entend tout élément longiligne de grande longueur relativement à sa section transversale, quelle que soit la forme de cette dernière, par exemple circulaire, oblongue, rectangulaire ou carrée, ou même plate, cet élément filaire pouvant être rectiligne comme non rectiligne, par exemple torsadé, ou ondulé.

Préférentiellement, les éléments de renfort de protection et/ou de travail sont métalliques. Par métallique, on entend par définition un élément de renfort constitué, en masse, majoritairement (c'est-à-dire pour plus de 50% de ces fils) ou intégralement (pour 100% des fils) d'un matériau métallique, par exemple de l'acier.

Encore plus préférentiellement, les éléments de renfort de protection et/ou de travail sont des câbles métalliques comprenant plusieurs fils unitaires métalliques. Par fil unitaire métallique, on entend par définition un monofilament constitué majoritairement (c'est-à-dire pour plus de 50% de sa masse) ou intégralement (pour 100% de sa masse) d'un matériau métallique. Chaque monofilament est préférentiellement en acier, plus préférentiellement en acier perlitique (ou ferrito-perlitique) au carbone désigné ci-après par "acier au carbone", ou encore en acier inoxydable (par définition, acier comportant au moins 11% de chrome et au moins 50% de fer).

Lorsqu'un acier au carbone est utilisé, sa teneur en carbone (% en poids d'acier) est de préférence comprise entre 0,5% et 0,9%. On utilise de préférence un acier du type steel cord à résistance normale (dit "NT" pour " Normal Tensile "), à haute résistance (dit "HT" pour " High Tensile ") ou à très haute résistance (dit SHT pour « Super High Tensile) dont la résistance en traction (Rm) est de préférence supérieure à 2500 MPa, plus préférentiellement supérieure à 3000 MPa et encore plus préférentiellement 3500 MPa (mesure effectuée en traction selon la norme ISO 6892-1 de 2009.

Dans un mode de réalisation préféré, chaque fil unitaire métallique présente un diamètre allant de 0,10 mm à 0,35 mm.

Concernant les éléments de renforts, les mesures de force à la rupture notée Fr (charge maximale en N) sont effectuées en traction selon la norme ISO 6892-1 d'octobre 2009 sur des éléments de renforts extraits de pneumatiques, de préférence sensiblement neufs, comprenant de la gomme du pneumatique. Concernant les nappes d'éléments de renfort, la force à rupture de la nappe, notée Fm, est obtenue en divisant la force à rupture Fr par le pas de pose.

Dans la présente demande, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

L'invention sera mieux comprise à la lecture de la description qui va suivre, donnée uniquement à titre d'exemple non limitatif et faite en se référant aux dessins dans lesquels :
- la figure 1 est une vue en coupe simplifiée d'un pneumatique selon l'invention ;
- la figure 2 est une vue de détails de la partie I du pneumatique de la figure 1.

### EXEMPLE DE PNEUMATIQUES SELON L'INVENTION

Dans la description suivante, dans l'emploi du terme « radial », il convient de distinguer plusieurs utilisations différentes du mot par la personne du métier. Premièrement, l'expression se réfère à un rayon du pneumatique. C'est dans ce sens qu'on dit d'un point, d'une nappe ou d'une armature P1 qu'il est « radialement intérieur » à un point, d'une nappe ou d'une armature P2 (ou « radialement à l'intérieur » du point P2) s'il est plus près de l'axe de rotation du pneumatique que le point, la nappe ou l'armature P2. Inversement, un point, une nappe ou une armature P3 est dit « radialement extérieur à » un point, une nappe ou une armature P4 (ou « radialement à l'extérieur » du point, d'une nappe ou d'une armature P4) s'il est plus éloigné de l'axe de rotation du pneumatique que le point, la nappe ou l'armature P4. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également.

En revanche, un élément de renfort ou une armature est dit « radial » lorsque l'élément de renfort ou les éléments de renfort de l'armature font avec la direction circonférentielle un angle supérieur ou égal à 65° et inférieur ou égal à 90°.

Une direction « axiale » est une direction parallèle à l'axe de rotation du pneumatique. Un point, une nappe ou une armature P5 est dit « axialement intérieur » à un point, une nappe ou une armature P6 (ou «axialement à l'intérieur » du point, de la nappe ou de l'armature P6) s'il est plus près du plan médian M du pneumatique que le point, la nappe ou l'armature P6. Inversement, un point, une nappe ou une armature P7 est dit « axialement extérieur à » un point P8 (ou « axialement à l'extérieur » du point, de la nappe ou de l'armature P8) s'il est plus éloigné du plan médian M du pneumatique que le point, la nappe ou l'armature P8.Le « plan médian » M du pneumatique est le plan qui est normal à l'axe de rotation du pneumatique et qui se situe à équidistance des structures annulaires de renfort de chaque bourrelet.

Une direction « circonférentielle » est une direction qui est perpendiculaire à la fois à un rayon du pneumatique et à la direction axiale.

Sur les figures, on a représenté un repère X, Y, Z correspondant respectivement aux orientations habituelles axiale, radiale et circonférentielle d'un pneumatique.

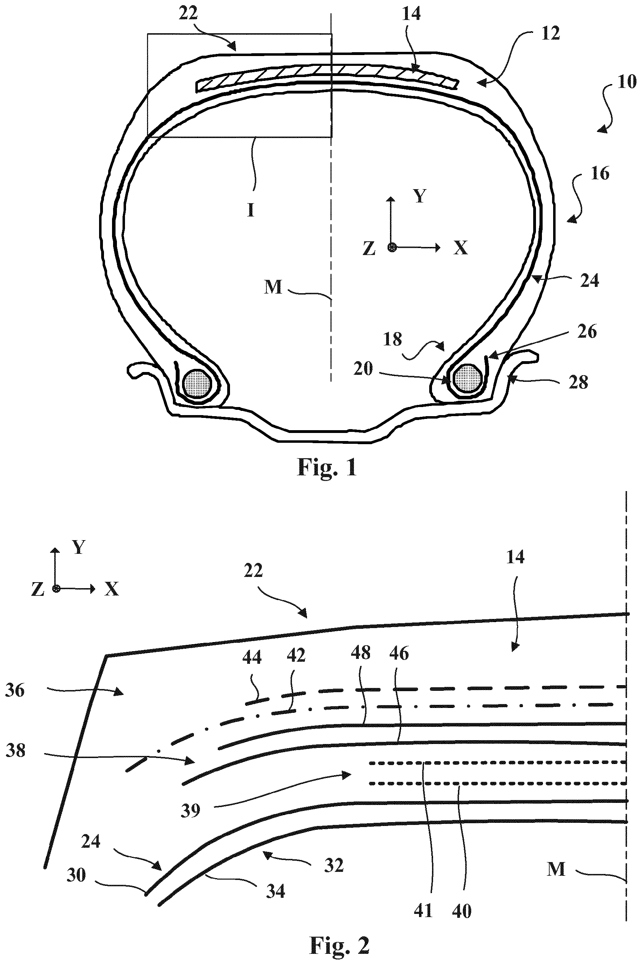

On a représenté sur les figures 1 et 2 un pneumatique pour véhicule de type génie civil, par exemple de type « dumper », et désigné par la référence générale 10. Ainsi, le pneumatique 10 présente une dimension de type W R U, par exemple 40.00 R 57 ou encore 59/80 R 63.

De façon connue pour l'homme du métier, W, désigne :
- lorsqu'il est sous la forme H/B, le rapport nominal d'aspect H/B tel que défini par l'ETRTO (H étant la hauteur de la section du pneumatique et B étant la largeur de la section du pneumatique)
- lorsqu'il est sous la forme H.00 ou B.00, dans lequel H=B, H et B étant tel que défini ci-dessus.
U représente le diamètre, en pouces, du siège de la jante sur laquelle le pneumatique est destiné à être monté, R désigne le type d'armature de carcasse du pneumatique, ici radiale. On a U≥35, de préférence U≥49 et plus préférentiellement U≥57.

Le pneumatique 10 comporte un sommet 12 renforcé par une armature de sommet 14, deux flancs 16 et deux bourrelets 18, chacun de ces bourrelets 18 étant renforcé avec une tringle 20. Le sommet 12 est surmonté d'une bande de roulement 22. L'armature de sommet 14 est agencée radialement à l'intérieur de la bande de roulement 22. Une armature de carcasse 24, agencée radialement à l'intérieur de l'armature de sommet 14, est ancrée dans chaque bourrelet 18, ici enroulée autour de chaque tringle 20 et comprend un retournement 26 disposé vers l'extérieur du pneumatique 10 qui est ici représenté monté sur une jante 28.

L'armature de carcasse 24 comprend au moins une nappe de carcasse 30 comprenant des éléments de renfort, dit de carcasse (non représentés). Les éléments de renfort de carcasse font un angle supérieur ou égal à 65°, de préférence à 80° et plus préférentiellement allant de 80° à 90° par rapport à la direction circonférentielle du pneumatique. Les éléments de renfort de carcasse sont agencés sensiblement parallèlement les uns aux autres et s'étendent d'un bourrelet 18 à l'autre. Des exemples de tels éléments de renfort de carcasse sont décrits dans les documents EP0602733 ou bien encore EP0383716.

Le pneumatique 10 comprend également une nappe d'étanchéité 32 constituée d'un élastomère (communément appelée "gomme intérieure") qui définit la face radialement interne 34 du pneumatique 10 et qui est destinée à protéger la nappe de carcasse 30 de la diffusion d'air provenant de l'espace intérieur au pneumatique 10.

L'armature de sommet 14 comprend, radialement de l'extérieur vers l'intérieur du pneumatique 10, une armature de protection 36 agencée radialement à l'intérieur de la bande de roulement 22, une armature de travail 38 agencée radialement à l'intérieur de l'armature de protection 36 et une armature de frettage 39 agencée radialement à l'intérieur de l'armature de travail 38. Ainsi, l'armature de protection 36 est intercalée radialement entre la bande de roulement 22 et l'armature de travail 38.

L'armature de protection 36 comprend des première et deuxième nappes de protection 42, 44, la première nappe de protection 42 étant agencée radialement à l'intérieur de la deuxième nappe de protection 44.

L'armature de travail 38 comprend des première et deuxième nappes de travail 46, 48, la première nappe de travail 46 étant agencée radialement à l'intérieur de la deuxième nappe de travail 48.

L'armature de frettage 39, également appelée bloc limiteur, dont la fonction est de reprendre en partie les sollicitations mécaniques de gonflage, comprend des première et deuxième nappes de frettage 40, 41, la première nappe de frettage 40 étant agencée radialement à l'intérieur de la deuxième nappe de frettage 41.

### ARMATURE DE PROTECTION

Les première et deuxième nappes de protection 42, 44 comprennent des éléments de renfort, dits de protection (non représentés). Ici, les éléments de renfort de chaque première et deuxième nappe de protection 42, 44 sont identiques. En l'espèce, chaque élément de renfort de protection de l'armature de protection 36 comprend un câble métallique. Les éléments de renfort de protection sont agencés côte à côte parallèlement les uns aux autres selon une direction principale sensiblement perpendiculaire à la direction générale selon laquelle ces éléments de renfort s'étendent. Les éléments de renfort de protection sont croisés d'une nappe de protection 42, 44 à l'autre.

Chaque élément de renfort de protection, ici la direction générale selon laquelle ces éléments de renfort s'étendent, fait un angle au moins égal à 10°, de préférence allant de 10° à 35° et plus préférentiellement de 15° à 35° avec la direction circonférentielle Z du pneumatique 10. Ici, l'angle est égal à 24°.

Ici, chaque élément de renfort de protection est un câble métallique du type 52.26 par exemple tel que décrit dans le document FR 2 959 517. Ce câble présente une structure K x (M+P), avec ici K=4, M=4 et P=9, comprenant une unique couche constituée de K torons, chaque toron comprenant :
- une couche interne du toron constituée de M fil(s) interne(s), et
- une couche externe du toron constituée de N fils externes enroulés en hélice autour de la couche interne du toron.
Chaque fil unitaire métallique présente un diamètre allant de 0,10 mm à 0,35 mm et ici égal à 0,26 mm.

Chaque élément de renfort de protection présente une force à rupture Fr supérieure ou égale à 3000 N, de préférence à 3500 N, plus préférentiellement à 4500 N et plus préférentiellement supérieure ou égale à 5500 N. Ici, la force à rupture du câble 52.26 est égale à 6038 N.

Le pas de pose des éléments de renfort de protection de chaque nappe de protection 42, 44 va de 1,2 à 6,5 mm, de préférence de 2,5 à 5,0 mm, et plus préférentiellement de 3,5 à 4,5 mm et est ici égal à 3,7 mm.

Chaque nappe de protection 42, 44 présente respectivement une force à rupture Fm_{NSP1}, Fm_{NSP2} supérieure ou égale à 1300 daN.cm⁻¹, de préférence à 1400 daN.cm⁻¹, plus préférentiellement à 1500 daN.cm⁻¹ et encore plus préférentiellement à 1600 daN.cm⁻¹ et ici Fm_{NSP1}=Fm_{NSP2}=Fm_{NSP}=1632 daN.cm⁻¹.

### ARMATURE DE TRAVAIL

Les première et deuxième nappes de travail 46, 48 comprennent des éléments de renfort, dits de travail (non représentés). Ici, les éléments de renfort de chaque première et deuxième nappe de travail 46, 44 sont identiques. En l'espèce, chaque élément de renfort de travail de l'armature de travail 38 comprend un câble métallique. Les éléments de renfort de travail sont agencés côte à côte parallèlement les uns aux autres selon une direction principale sensiblement perpendiculaire à la direction générale selon laquelle ces éléments de renfort s'étendent. Les éléments de renfort de travail sont croisés d'une nappe de travail 46, 48 à l'autre.

Chaque élément de renfort de travail, ici la direction générale selon laquelle ces éléments de renfort s'étendent, fait un angle au plus égal à 60°, de préférence allant de 15° à 40° avec la direction circonférentielle Z du pneumatique 10. Ici, l'angle des éléments de renfort de la première nappe de travail est égal à 19° et l'angle des éléments de renfort de la deuxième nappe de travail est égal à 33°.

Ici, chaque élément de renfort de travail est un câble métallique du type 84.26. Ce câble présente une structure (J+Q) x (A+B) avec J=1, Q=6, A=3 et B=9, et comprend :
- une couche interne du câble constituée de J toron(s) interne(s),
- une couche externe du câble constituée de Q torons externes enroulés en hélice autour de la couche interne du câble,
chaque toron interne et externe comprenant :
- une couche interne du toron constituée de A fil(s) interne(s),
- une couche externe du toron constituée de B fils externes enroulés en hélice autour de la couche interne du toron.
Chaque fil unitaire métallique présente un diamètre allant de 0,10 mm à 0,35 mm et ici égal à 0,26 mm.

Chaque élément de renfort de travail 84.26 présente une force à rupture Fr égale à 12251 N.

Le pas de pose des éléments de renfort de travail de chaque nappe de travail 46, 48 va de 2,5 à 7,5 mm, de préférence de 3,0 à 7,0 mm, et plus préférentiellement de 3,5 à 6,5 mm et est ici égal à 3,8 mm.

Chaque nappe de travail 46, 48 présente respectivement une force à rupture Fm_{NST1}, Fm_{NST2} supérieure ou égale à 2000 daN.cm⁻¹, de préférence à 2500 daN.cm⁻¹, plus préférentiellement à 3000 daN.cm⁻¹ et ici Fm_{NST1}=Fm_{NST2}= Fm_{NST}=3224 daN.cm⁻¹. Dans d'autres modes de réalisation utilisant d'autres câbles ou bien un pas de pose plus petit, la force à rupture Fm_{NST} est supérieure ou égale à 4000 daN.cm⁻¹.

Dans un autre mode de réalisation, chaque câble de travail est du type 189.23 et est de structure (J+Q) x (A +C+B) avec J=1, Q=6, A=3, C=9 et B=15 et comprend :
- une couche interne du câble constituée de J toron(s) interne(s),
- une couche externe du câble constituée de Q torons externes enroulés en hélice autour de la couche interne du câble,
chaque toron interne et externe comprenant :
- une couche interne du toron constituée de A fil(s) interne(s),
- une couche intermédiaire du toron constituée de C fils intermédiaires enroulés en hélice autour de la couche interne du toron,
- une couche externe du toron constituée de B fils externes enroulés en hélice autour de la couche intermédiaire du toron.
On a alors une force à rupture supérieure ou égale à 15000 N, de préférence à 20000 N, plus préférentiellement à 25000 N.

### ARMATURE DE FRETTAGE

Chaque nappe de frettage 40, 41 comprend des éléments de renfort métalliques de frettage (non représentés), par exemple des câbles métalliques identiques aux éléments de renfort de protection, et faisant un angle au plus égal à 10°, de préférence allant de 5° à 10° avec la direction circonférentielle Z du pneumatique 10. Ici l'angle est égal à 8°. Les éléments de renfort de frettage sont croisés d'une nappe de frettage 40, 41 à l'autre. Ainsi, dans le mode de réalisation illustré, à l'exception de l'angle que font les éléments de renfort de chaque nappe, les nappes de frettage et de protection sont identiques.

De façon préférée, qu'il soit identique ou non aux éléments de renfort de protection, chaque élément de renfort de frettage est constitué d'un câble métallique présentant une structure K' x (M'+P'), comprenant une unique couche constituée de K' torons, chaque toron comprenant :
- une couche interne du toron constituée de M' fil(s) interne(s), et
- une couche externe du toron constituée de N' fils externes enroulés en hélice autour de la couche interne du toron.

Chaque fil unitaire métallique présente un diamètre allant de 0,10 mm à 0,35 mm.

Chaque élément de renfort de frettage présente une force à rupture Fr supérieure ou égale à 2500 N, de préférence à 4000 N, plus préférentiellement à 6000 N et plus préférentiellement supérieure ou égale à 8500 N.

Le pas de pose des éléments de renfort de frettage de chaque nappe de frettage 42, 44 va de 1,8 à 6,5 mm, de préférence de 3,0 à 5,5 mm, et plus préférentiellement de 3,7 à 4,8 mm.

Chaque nappe de frettage 40, 41 présente respectivement une force à rupture Fm_{NSF1}, Fm_{NSF2} supérieure ou égale à 1300 daN.cm⁻¹, de préférence à 1500 daN.cm⁻¹, plus préférentiellement à 1800 daN.cm⁻¹ et encore plus préférentiellement à 2000 daN.cm⁻¹.

En variante, on pourra utiliser des éléments de renfort de frettage différents de ceux de l'armature de protection.

### EXEMPLE DE PROCEDE DE FABRICATION DES CABLES DES PNEUMATIQUES SELON L'INVENTION

On fabrique les câbles métalliques par câblage ou bien par retordage, selon des procédés classiques connus de l'homme du métier.

### TESTS COMPARATIFS

On a comparé ci-dessous un pneumatique de l'état de la technique T0, un pneumatique témoin T1 et plusieurs pneumatiques P1 à P5 selon l'invention. Tous les pneumatiques T0, P1 à P5 comprennent deux nappes de protection comprenant des éléments de renfort de protection identiques d'une nappe de protection à l'autre, deux nappes de travail comprenant des éléments de travail identiques d'une nappe de travail à l'autre et deux nappes de frettage comprenant des éléments de frettage identiques d'une nappe de travail à l'autre. Le pneumatique P1 est identique au pneumatique 10 décrit ci-dessus. Les pneumatiques P2 à P5 correspondent à des modes de réalisation dans lesquels on a fait uniquement varier les pas de pose des éléments de renfort de protection et/ou de travail pour faire varier les valeurs de Fm_{NSP1}=Fm_{NSP2}=Fm_{NSP} et Fm_{NST1}=Fm_{NST2}=Fm_{NST}. Pour chaque pneumatique Pi, on a indiqué le pourcentage relatif N de variation de Fm_{NST} égal à 100.(Fm_{NST}(T1 ou Pi)-Fm_{NST}(T0))/ Fm_{NST}(T0). Le pneumatique T1 est, contrairement au pneumatique T0 et aux pneumatiques P1 à P5, dépourvu d'armature de frettage.

On a testé chaque pneumatique dans un test de rupture des nappes de travail dans lequel on fait passer le pneumatique sur un indenteur présentant une tête hémisphérique de plusieurs centimètres de diamètre. A chaque passage, on réhausse l'indenteur de 5 mm jusqu'à rupture d'une des nappes de travail. Plus la hauteur à laquelle l'une des nappes de travail rompt est importante (hauteur maximale Hm), plus le pneumatique est résistant contre l'action de l'indenteur. On a ramené les hauteurs maximale Hm mesurées à la hauteur maximale Ho mesurée pour le pneumatique T0. Le pourcentage donné R est égal à la valeur 100.(Hm-Ho/)Ho.

On a rassemblé les caractéristiques des différents pneumatiques T0, T1 et P1 à P5 ainsi que les résultats aux tests de rupture dans le tableau 1 ci-dessous.

**Tableau 1**

| | Fm_{NSP} (daN.cm⁻¹) | Fm_{NST} (daN.cm⁻¹) | Fm_{NSP}/Fm_{NST} | Armature de frettage | N (%) | R (%) |
|---|---|---|---|---|---|---|
| T0 | 616 | 2406 | 0,26 | Oui | 0 | 0 |
| T1 | 1016 | 3224 | 0,31 | Non | 34 | 17 |
| P1 | 1632 | 3224 | 0,51 | Oui | 34 | 39 |
| P2 | 1016 | 2574 | 0,39 | Oui | 7 | 19 |
| P3 | 850 | 2406 | 0,35 | Oui | 0 | 15 |
| P4 | 1016 | 2189 | 0,46 | Oui | -9 | 12 |
| P5 | 1016 | 1660 | 0,61 | Oui | -31 | -1 |

On remarque que les pneumatiques P1 à P5 selon l'invention sont tous tels que Fm_{NSP}/Fm_{NST} ≥ 0,27 et même tels que Fm_{NSP}/Fm_{NST} ≥ 0,30 voire tels que Fm_{NSP}/Fm_{NST} ≥ 0,35, même tels que Fm_{NSP}/Fm_{NST} ≥ 0,41, voire même encore tels que Fm_{NSP}/Fm_{NST} ≥ 0,50. En outre, les pneumatiques P1 à P5 selon l'invention sont tous tels que Fm_{NSP}/Fm_{NST} ≤ 0,90 voire tels que Fm_{NSP}/Fm_{NST} ≤ 0,70.

Les résultats aux tests de rupture du pneumatique P1 montrent que, pour une hausse relativement importante de la valeur de Fm_{NST} (34%), on obtient également une hausse relativement importante de la hauteur maximale en augmentant la valeur de Fm_{NSP} de sorte que Fm_{NSP}/ Fm_{NST} ≥ 0,27.

En outre, les résultats aux tests de rupture des pneumatiques P2 et P3 montrent que, pour une hausse relativement faible voire un maintien de la valeur de Fm_{NST} (7% et 0%), on obtient une hausse significative de la hauteur maximale (19% et 15%) en augmentant la valeur de Fm_{NSP} de sorte que Fm_{NSP}/ Fm_{NST} ≥ 0,27.

De plus, les résultats aux tests de rupture du pneumatique P4 montrent que, pour une baisse modérée de la valeur de Fm_{NST} (-9%), on obtient toutefois une hausse sensible de la hauteur maximale (12%) en augmentant la valeur de Fm_{NSP} de sorte que Fm_{NSP}/ Fm_{NST} ≥ 0,27.

Enfin, les résultats aux tests de rupture du pneumatique P5 montrent que, pour une baisse relativement importante de la valeur de Fm_{NST} (-31%), la hauteur maximale n'est quasiment pas impactée (-1%) en augmentant la valeur de Fm_{NSP} de sorte que Fm_{NSP}/ Fm_{NST} ≥ 0,27.

La comparaison des résultats aux tests de rupture entre les pneumatiques T0 et P3 montre que, pour une valeur fixée de Fm_{NST}, l'augmentation du rapport Fm_{NSP}/ Fm_{NST}, permet un gain de hauteur maximale de 15%. La comparaison des résultats aux tests de rupture entre les pneumatiques T0 et P4 montre que, pour une baisse de la valeur de Fm_{NST}, l'augmentation du rapport Fm_{NSP}/Fm_{NST}, permet quand même un gain de hauteur maximale de 12%.

La comparaison du pneumatique T1 avec les pneumatiques P3 et P4 montre que, bien que les Fm_{NST} des pneumatiques P3 et P4 soient largement inférieures à la Fm_{NST} du pneumatique T1, on obtient, pour une même valeur de Fm_{NSP} (cas de P4) ou pour une valeur proche du rapport Fm_{NSP}/ Fm_{NST} (cas de P3), une hauteur maximale comparable.

Ainsi, en conclusion, un pneumatique selon l'invention présentant un rapport Fm_{NSP}/ Fm_{NST} supérieur ou égal à 0,27 associé à une armature de frettage permet d'augmenter la résistance mécanique aux indenteurs des nappes de travail en limitant l'augmentation, voire en maintenant et même et diminuant la résistance mécanique de ces nappes de travail.

L'invention ne se limite pas aux modes de réalisation précédemment décrits.

En effet, on pourra, dans le cadre de l'invention, envisager une armature de protection comprenant plusieurs nappes de protection dont seulement l'une d'entre elles présente une force à rupture Fm_{NSP} telle que le rapport Fm_{NSP}/Fm_{NST} est supérieur ou égal à 0,27.

Toujours dans le cadre de l'invention, on pourra envisager une armature de travail comprenant plusieurs nappes de travail dont seulement l'une d'entre elles présente une force à rupture Fm_{NST} telle que le rapport Fm_{NSP}/Fm_{NST} est supérieur ou égal à 0,27.

Toujours dans le cadre de l'invention, on pourra envisager un pneumatique comprenant :
- une armature de protection comprenant plusieurs nappes de protection dont au moins deux présentent des forces à rupture différentes, par exemple grâce à des éléments de renfort différents, et
- une armature de travail comprenant plusieurs nappes de travail dont au moins deux présentent des forces à rupture différentes, par exemple grâce à des éléments de renfort différents,
au moins une nappe de protection présente une force à rupture Fm_{NSP} et au moins une nappe de travail présente une force à rupture Fm_{NST} telles que le rapport Fm_{NSP}/Fm_{NST} est supérieur ou égal à 0,27.

## Revendications

1. Pneumatique (10) pour véhicule de génie civil comprenant une bande de roulement (22) et une armature de sommet (14) agencée radialement à l'intérieur de la bande de roulement (22), l'armature de sommet (14) comprenant :
- une armature de protection (36) comprenant au moins une nappe de protection (42, 44) présentant une force à rupture Fm_{NSP} ;
- une armature de travail (38) comprenant au moins une nappe de travail (46, 48) présentant une force à rupture Fm_{NST}, l'armature de travail (38) étant agencée radialement à l'intérieur de l'armature de protection (36) ; et
et dans lequel le rapport FM_{NSP}/FM_{NST} est supérieur ou égal à 0,27 ; **caractérisé en ce que,** le pneumatique (10) comprend :
- une armature de frettage (39) comprenant au moins une nappe de frettage (40, 41), la nappe de frettage (40, 41) comprenant des éléments de renfort, dit de frettage, les éléments de renfort de frettage faisant un angle au plus égal à 10° avec la direction circonférentielle du pneumatique (10).

2. Pneumatique (10) selon la revendication précédente, dans lequel le rapport Fm_{NSP}/Fm_{NST} est supérieur ou égal à 0,30, de préférence à 0,35, plus préférentiellement à 0,41 et encore plus préférentiellement à 0,50.

3. Pneumatique (10) selon l'une quelconque des revendications précédentes, dans lequel le rapport Fm_{NSP}/Fm_{NST} est inférieur ou égal à 0,90, de préférence à 0,70.

4. Pneumatique (10) selon l'une quelconque des revendications précédentes, dans lequel chaque nappe de protection (42, 44) présente une force à rupture Fm_{NSP} supérieure ou égale à 1300 daN.cm⁻¹, de préférence à 1400 daN.cm⁻¹, plus préférentiellement à 1500 daN.cm⁻¹ et encore plus préférentiellement à 1600 daN.cm⁻¹.

5. Pneumatique (10) selon l'une quelconque des revendications précédentes, dans lequel, chaque nappe de protection (42, 44) comprenant des éléments de renfort, dit de protection, chaque élément de renfort de protection présente une force à rupture (Fr) supérieure ou égale à 3000 N, de préférence à 3500 N, plus préférentiellement à 4500 N et encore plus préférentiellement à 5500 N.

6. Pneumatique (10) selon l'une quelconque des revendications précédentes, dans lequel, chaque nappe de protection (42, 44) comprenant des éléments de renfort, dit de protection, le pas de pose des éléments de renfort de protection va de 1,2 à 6,5 mm, de préférence de 2,5 à 5,0 mm, et plus préférentiellement de 3,5 à 4,5 mm.

7. Pneumatique (10) selon l'une quelconque des revendications précédentes, dans lequel chaque nappe de travail (46, 48) présente une force à rupture Fm_{NST} supérieure ou égale à 2000 daN.cm⁻¹, de préférence à 2500 daN.cm⁻¹, plus préférentiellement à 3000 daN.cm⁻¹ et encore plus préférentiellement à 4000 daN.cm⁻¹.

8. Pneumatique (10) selon l'une quelconque des revendications précédentes, dans lequel, chaque nappe de travail (46, 48) comprenant des éléments de renfort, dit de travail, chaque élément de renfort de travail présente une force à rupture (Fr) supérieure ou égale à 15000 N, de préférence à 20000 N, plus préférentiellement à 25000 N.

9. Pneumatique (10) selon l'une quelconque des revendications précédentes, dans lequel, chaque nappe de travail (46, 48) comprenant des éléments de renfort, dit de travail, le pas de pose des éléments de renfort de travail va de 2,5 à 7,5 mm, de préférence de 3,0 à 7,0 mm, et plus préférentiellement de 3,5 à 6,5 mm.

10. Pneumatique (10) selon l'une quelconque des revendications précédentes, dans lequel l'armature de protection (36) est intercalée radialement entre la bande de roulement (22) et l'armature de travail (38).

11. Pneumatique (10) selon l'une quelconque des revendications précédentes, dans lequel, chaque nappe de protection comprenant des éléments de renfort, dit de protection, les éléments de renfort de protection font un angle au moins égal à 10°, de préférence allant de 10° à 35° et plus préférentiellement de 15° à 35° avec la direction circonférentielle du pneumatique (10).

12. Pneumatique (10) selon l'une quelconque des revendications précédentes, dans lequel, chaque nappe de travail (46, 48) comprenant des éléments de renfort, dit de travail, les éléments de renfort de travail font un angle au plus égal à 60°, de préférence allant de 15° à 40° avec la direction circonférentielle du pneumatique (10).

13. Pneumatique (10) selon l'une quelconque des revendications précédentes, dans lequel les éléments de renfort de frettage font un angle allant de 5° à 10° avec la direction circonférentielle du pneumatique (10).

14. Pneumatique (10) selon l'une quelconque des revendications précédentes, dans lequel l'armature de frettage (40) est agencée radialement à l'intérieur de l'armature de travail (38).

15. Pneumatique (10) selon l'une quelconque des revendications précédentes, présentant une dimension de type W R U avec U≥35, de préférence U≥49 et plus préférentiellement U≥57.

## Patentansprüche

1. Reifen (10) für ein Baumaschinenfahrzeug, welcher einen Laufstreifen (22) und eine radial innerhalb des Laufstreifens (22) angeordnete Scheitelbewehrung (14) umfasst, wobei die Scheitelbewehrung (14) umfasst:
- eine Schutzbewehrung (36), die wenigstens eine Schutzlage (42, 44) umfasst, welche eine Reißkraft Fm_{NSP} aufweist;
- eine Arbeitsbewehrung (38), die wenigstens eine Arbeitslage (46, 48) umfasst, welche eine Reißkraft Fm_{NST} aufweist, wobei die Arbeitsbewehrung (38) radial innerhalb der Schutzbewehrung (36) angeordnet ist; und
Und wobei das Verhältnis Fm_{NSP}/Fm_{NST} größer oder gleich 0,27 ist;
**dadurch gekennzeichnet, dass** der Reifen (10) umfasst:
- eine Umhüllungsbewehrung (39), die wenigstens eine Umhüllungslage (40, 41) umfasst, wobei die Umhüllungslage (40, 41) sogenannte Umhüllungsverstärkungselemente umfasst, wobei die Umhüllungsverstärkungselemente einen Winkel von höchstens 10° mit der Umfangsrichtung des Reifens (10) bilden.

2. Reifen (10) nach dem vorhergehenden Anspruch, wobei das Verhältnis Fm_{NSP}/Fm_{NST} größer oder gleich 0,30, vorzugsweise größer oder gleich 0,35, stärker bevorzugt größer oder gleich 0,41 und noch stärker bevorzugt größer oder gleich 0,50 ist.

3. Reifen (10) nach einem der vorhergehenden Ansprüche, wobei das Verhältnis Fm_{NSP}/Fm_{NST} kleiner oder gleich 0,90, vorzugsweise kleiner oder gleich 0,70 ist.

4. Reifen (10) nach einem der vorhergehenden Ansprüche, wobei jede Schutzlage (42, 44) eine Reißkraft Fm_{NSP} aufweist, die größer oder gleich 1300 daN.cm⁻¹, vorzugsweise größer oder gleich 1400 daN.cm⁻¹, stärker bevorzugt größer oder gleich 1500 daN.cm⁻¹, und noch stärker bevorzugt größer oder gleich 1600 daN.cm⁻¹ ist.

5. Reifen (10) nach einem der vorhergehenden Ansprüche, wobei, wenn jede Schutzlage (42, 44) sogenannte Schutzverstärkungselemente umfasst, jedes Schutzverstärkungselement eine Reißkraft (Fr) aufweist, die größer oder gleich 3000 N, vorzugsweise größer oder gleich 3500 N, stärker bevorzugt größer oder gleich 4500 N und noch stärker bevorzugt größer oder gleich 5500 N ist.

6. Reifen (10) nach einem der vorhergehenden Ansprüche, wobei, wenn jede Schutzlage (42, 44) sogenannte Schutzverstärkungselemente umfasst, der Abstand der Einlage der Schutzverstärkungselemente 1,2 bis 6,5 mm, vorzugsweise 2,5 bis 5,0 mm und stärker bevorzugt 3,5 bis 4,5 mm beträgt.

7. Reifen (10) nach einem der vorhergehenden Ansprüche, wobei jede Arbeitslage (46, 48) eine Reißkraft Fm_{NST} aufweist, die größer oder gleich 2000 daN.cm⁻¹, vorzugsweise größer oder gleich 2500 daN.cm⁻¹, stärker bevorzugt größer oder gleich 3000 daN.cm⁻¹, und noch stärker bevorzugt größer oder gleich 4000 daN.cm⁻¹ ist.

8. Reifen (10) nach einem der vorhergehenden Ansprüche, wobei, wenn jede Arbeitslage (46, 48) sogenannte Arbeitsverstärkungselemente umfasst, jedes Arbeitsverstärkungselement eine Reißkraft (Fr) aufweist, die größer oder gleich 15000 N, vorzugsweise größer oder gleich 20000 N, stärker bevorzugt größer oder gleich 25000 N ist.

9. Reifen (10) nach einem der vorhergehenden Ansprüche, wobei, wenn jede Arbeitslage (46, 48) sogenannte Arbeitsverstärkungselemente umfasst, der Abstand der Einlage der Arbeitsverstärkungselemente 2,5 bis 7,5 mm, vorzugsweise 3,0 bis 7,0 mm und stärker bevorzugt 3,5 bis 6,5 mm beträgt.

10. Reifen (10) nach einem der vorhergehenden Ansprüche, wobei die Schutzbewehrung (36) radial zwischen dem Laufstreifen (22) und der Arbeitsbewehrung (38) eingefügt ist.

11. Reifen (10) nach einem der vorhergehenden Ansprüche, wobei, wenn jede Schutzlage sogenannte Schutzverstärkungselemente umfasst, die Schutzverstärkungselemente mit der Umfangsrichtung des Reifens (10) einen Winkel bilden, der wenigstens gleich 10° ist, vorzugsweise 10° bis 35° und stärker bevorzugt 15° bis 35° beträgt.

12. Reifen (10) nach einem der vorhergehenden Ansprüche, wobei, wenn jede Arbeitslage (46, 48) sogenannte Arbeitsverstärkungselemente umfasst, die Arbeitsverstärkungselemente mit der Umfangsrichtung des Reifens (10) einen Winkel bilden, der höchstens gleich 60° ist und vorzugsweise 15° bis 40° beträgt.

13. Reifen (10) nach einem der vorhergehenden Ansprüche, wobei die Umhüllungsverstärkungselemente mit der Umfangsrichtung des Reifens (10) einen Winkel bilden, der 5° bis 10° beträgt.

14. Reifen (10) nach einem der vorhergehenden Ansprüche, wobei die Umhüllungsbewehrung (40) radial innerhalb der Arbeitsbewehrung (38) angeordnet ist.

15. Reifen (10) nach einem der vorhergehenden Ansprüche, welcher eine Abmessung vom Typ W R U aufweist, mit U≥35, vorzugsweise U≥49 und stärker bevorzugt U≥57.

## Claims

1. Tyre (10) for a construction plant vehicle, comprising a tread (22) and a crown reinforcement (14) arranged radially on the inside of the tread (22), the crown reinforcement (14) comprising:
- a protective reinforcement (36) comprising at least one protective ply (42, 44) that exhibits a force at break Fm_{NSP} ;
- a working reinforcement (38) comprising at least one working ply (46, 48) that exhibits a force at break Fm_{NST}, the working reinforcement (38) being arranged radially on the inside of the protective reinforcement (36) ; and
and wherein the ratio Fm_{NSP}/Fm_{NST} is greater than or equal to 0.27;
**characterized in that** the tyre (10) comprises:
- a hoop reinforcement (39) comprising at least one hooping ply (40, 41), the hooping ply (40, 41) comprising reinforcing elements known as hoop reinforcing elements, the hoop reinforcing elements making an angle at most equal to 10° with the circumferential direction of the tyre (10).

2. Tyre (10) according to the preceding claim, wherein the ratio Fm_{NSP}/Fm_{NST} is greater than or equal to 0.30, preferably greater than or equal to 0.35, more preferably greater than or equal to 0.41 and even more preferably greater than or equal to 0.50.

3. Tyre (10) according to either one of the preceding claims, wherein the ratio Fm_{NSP}/Fm_{NST} is less than or equal to 0.90, preferably less than or equal to 0.70.

4. Tyre (10) according to any one of the preceding claims, wherein each protective ply (42, 44) exhibits a force at break Fm_{NSP} greater than or equal to 1300 daN.cm⁻¹, preferably greater than or equal to 1400 daN.cm⁻¹, more preferably greater than or equal to 1500 daN.cm⁻¹ and even more preferably greater than or equal to 1600 daN.cm⁻¹.

5. Tyre (10) according to any one of the preceding claims, wherein, with each protective ply (42, 44) comprising reinforcing elements known as protective reinforcing elements, each protective reinforcing element exhibits a force at break (Fr) greater than or equal to 3000 N, preferably greater than or equal to 3500 N, more preferably greater than or equal to 4500 N and even more preferably greater than or equal to 5500 N.

6. Tyre (10) according to any one of the preceding claims, wherein, with each protective ply (42, 44) comprising reinforcing elements known as protective reinforcing elements, the pitch at which the protective reinforcing elements are laid ranges from 1.2 to 6.5 mm, preferably from 2.5 to 5.0 mm, and more preferably from 3.5 to 4.5 mm.

7. Tyre (10) according to any one of the preceding claims, wherein each working ply (46, 48) exhibits a force at break Fm_{NST} greater than or equal to 2000 daN.cm⁻¹, preferably greater than or equal to 2500 daN.cm⁻¹, more preferably greater than or equal to 3000 daN.cm⁻¹ and even more preferably greater than or equal to 4000 daN.cm⁻¹.

8. Tyre (10) according to any one of the preceding claims, wherein, with each working ply (46, 48) comprising reinforcing elements known as working reinforcing elements, each working reinforcing element exhibits a force at break (Fr) greater than or equal to 15 000 N, preferably greater than or equal to 20 000 N and more preferably greater than or equal to 25 000 N.

9. Tyre (10) according to any one of the preceding claims, wherein, with each working ply (46, 48) comprising reinforcing elements known as working reinforcing elements, the pitch at which the working reinforcing elements are laid ranges from 2.5 to 7.5 mm, preferably from 3.0 to 7.0 mm, and more preferably from 3.5 to 6.5 mm.

10. Tyre (10) according to any one of the preceding claims, wherein the protective reinforcement (36) is interposed radially between the tread (22) and the working reinforcement (38).

11. Tyre (10) according to any one of the preceding claims, wherein, with each protective ply comprising reinforcing elements known as protective reinforcing elements, the protective reinforcing elements make an angle at least equal to 10°, preferably in the range from 10° to 35° and more preferably from 15° to 35°, with the circumferential direction of the tyre (10).

12. Tyre (10) according to any one of the preceding claims, wherein, with each working ply (46, 48) comprising reinforcing elements known as working reinforcing elements, the working reinforcing elements make an angle at most equal to 60°, preferably in the range from 15° to 40°, with the circumferential direction of the tyre (10).

13. Tyre (10) according to any one of the preceding claims, wherein the hoop reinforcing elements make an angle in the range from 5° to 10° with the circumferential direction of the tyre (10).

14. Tyre (10) according to any one of the preceding claims, wherein the hoop reinforcement (40) is arranged radially on the inside of the working reinforcement (38) .

15. Tyre (10) according to any one of the preceding claims, which has a size of the W R U type, where U≥35, preferably U≥49 and more preferably U≥57.
